# NEW EUROPEAN PATENT SPECIFICATION

(11) **EP 3 524 870 B2**
(45) Date of publication and mention of the opposition decision: **02.08.2023**
(45) Mention of the grant of the patent: 04.11.2020
(21) Application number: 18425060.3
(22) Date of filing: 31.07.2018
(51) Int. Cl.: F16P 3/14

(54) **MONITORING DEVICE AND METHOD FOR MONITORING A MONITORED ZONE**
ÜBERWACHUNGSVORRICHTUNG UND VERFAHREN ZUM ÜBERWACHEN EINER ÜBERWACHTEN ZONE
DISPOSITIF DE SURVEILLANCE ET PROCÉDÉ DE SURVEILLANCE D'UNE ZONE SURVEILLÉE

(30) Priority: 08.02.2018 IT 201800002494
(43) Date of publication of application: 14.08.2019
(60) Divisional application: 19184024.8
(73) Proprietor: Omron Europe B.V., 2132 JD Hoofddorp (NL)
(72) Inventor: Naser, Mohammad, 5611PB Eindhoven (NL); Ramanathan, Krishnan, 5611BM Eindhoven (NL); Grange, Gianmarco, 10046 Poirino TO (IT); Viviani, Paolo, 10046 Poirino TO (IT)
(74) Representative: Horn Kleimann Waitzhofer Patentanwälte PartG mbB

(56) References cited:
- EP-A1- 1 826 589
- EP-A1- 2 395 274
- EP-A2- 1 793 244
- EP-A2- 1 793 244
- EP-B1- 1 164 556
- EP-B1- 1 306 603
- EP-B1- 1 963 210
- EP-B1- 2 180 348
- DE-A1-102007 013 299
- DE-B3-102016 116 350
- DE-B3-102016 116 350
- DE-U1-202004 020 863
- DE-U1-202004 020 863
- US-B2- 6 737 970
- US-B2- 6 737 970
- US-B2- 8 330 095
- US-B2- 8 330 095

## Description

The present invention relates to a monitoring device for monitoring a monitored zone. The invention further relates to a method for monitoring the monitored zone.

A monitoring device can be used to protect a safety zone comprising a dangerous factory device at a manufacturing site. The monitoring device may include a light curtain device for detecting the presence of an object along a boundary section of the safety zone. When an object is detected, a warning signal may be emitted or another protective measure may be performed. It can be desired to obtain further information about the object to thereby improve the monitoring of the monitored zone and increase the safety of the safety zone.

The document US 2017/0052278 A1 discloses a dynamic partial muting of a light curtain in accordance with a height of an object crossing the light curtain. Further, the document US 2009/0244551 A1 discloses a sensor apparatus for determining the shape of a load on a carrier device, in particular for determining whether the load has an overhang or not.

US 8 330 095 B2 discloses an optical scanning type photoelectric switch capable of preventing interference with another photoelectric switch by use of its own capability.

It is one object of the present invention to provide an improved monitoring device. A further object of the present invention is to provide an improved method for monitoring the monitored zone.

According to a first aspect of the invention which is defined in claim 1, a monitoring device for monitoring a monitored zone which is adjacent to a safety zone is provided. The monitoring device comprises:
a light curtain device for detecting an object touching a boundary section located at a boundary between the monitored zone and the safety zone;
a time-of-flight device for detecting a distance to the object and/or a size of the object; and
an evaluation device for emitting an evaluation result based on the distance to the object and/or on the size of the object determined by the time-of-flight device, and optionally based on a light curtain signal from the light curtain device.

Providing the monitoring device with a time-of-flight device is in particular advantageous in that further information on the object such as the distance to the object or the size of the object can be detected. The information on the object can improve the understanding of what is happening in the monitored zone and in particular can improve the monitoring of the monitored zone. The information on the object can be reflected in the evaluation result. The evaluation result may help making decisions relating to the protection of the safety zone. Thus, with the monitoring device according to the first aspect, a monitoring of the monitored zone and a protection of the safety zone can be improved.

The safety zone can be a three dimensional or two-dimensional region. It may be at least partially delimited by the boundary section. In embodiments, the safety zone is a dangerous zone, for example a dangerous zone of a factory arrangement comprising a dangerous factory device. The safety zone can be a virtual zone, which does not have any physical boundaries.

The monitored zone and the safety zone may be adjacent zones touching each other along the boundary section. The monitored zone can be a virtual zone, which does not have any physical boundaries. The monitored zone and the safety zone can be three-dimensional zones. The safety zone can be a zone which has to be protected, for example because is comprises a dangerous machine and/or should not be accessed by non-authorized persons. The safety zone can be protected by monitoring the monitored zone, in particular by monitoring objects located in the monitored zone approaching the safety zone.

The boundary section may be a two-dimensional area or a one-dimensional line. For example, the boundary section is a plane delimiting the safety zone from the monitored zone. The boundary section can be the boundary between the inside of the safety zone and the outside of the safety zone (monitored zone). The boundary section may be a virtual area which is not defined by any physical boundaries.

The object can be any type of visible item. For example, it can be a manufactured object, a box, a human, a vehicle or the like.

The light curtain device may detect whether any object is touching the boundary section or not. It can be considered that an object is touching the boundary section if any part thereof is in contact with the boundary section. In particular, an object that crosses the boundary section touches the boundary section. For example, the object has to touch the boundary section to at least partially enter or leave the safety zone through the monitored zone. The light curtain device can be arranged along the boundary section, in particular at an edge of the boundary section.

To detect the presence of an object touching the boundary section, the light curtain device can comprise a least one light emitting element for emitting light beams, for example in a pulsed manner at predetermined frequency, as well as at least one light receiving element for receiving only light at the predetermined frequency. In particular, when the beam of light emitted by the light emitting element is interrupted, for example due to the presence of an object touching the boundary section, no light or less light is received by the light receiving. In this case, the light curtain device can recognize the presence of the object touching the boundary section.

The light emitting element can emit the light along the boundary section, in particular such that the light is emitted along a grid that coincides with the boundary section. In embodiments, the light emitting element is arranged on one side of the boundary section and the light receiving element is arranged on the other side of the boundary section. The light curtain device may determine the light curtain signal, which for example indicates whether an object touches the boundary section or not.

The time-of-flight device may be a device using a time-of-flight method to determine the distance to the object. In particular, the time-of-flight (ToF) device may emit a wave signal such as a light signal and calculate the distance to the object based on a time it takes to the wave signal to travel to the object and back to the time-of-flight device. The distance to the object can designate the distance between the time-of-flight device and the object. The distance to the object can be determined based on a single wave signal (light signal) emitted by the time-of-flight device. In particular, the distance to the object can be determined individually based on each individual wave signal. It is also possible to determine the distance to the object based on a plurality, in particular based on all wave signals emitted by the time-of-flight device.

The time-of-flight device can be located at an edge of the boundary section, for example next to the light curtain device. Alternatively, it can be located anywhere inside or close to the monitored zone. In particular, the wave signal emitted by the time-of-flight device are emitted in all directions or along one or several predetermined directions only.

The size of the object may be determined based on the difference in the time-of-flight of at least two wave signals emitted in the direction of the object, as will be described in greater detail below.

The evaluation device can receive a signal from the time-of-flight device including the detected distance to the object and/or the size of the object, and/or a signal from the light curtain device indicating whether the object touches the boundary section. The evaluation device may evaluate this or these receives signal(s) and determine the evaluation result based thereon.

In embodiments, the evaluation device is implemented to calculate the evaluation result as a function of the distance between the time-of-flight device and the object and/or the size of the object determined by the time-of-flight device, and optionally as a function of a light curtain signal from the light curtain device.

In particular, the light curtain device and the time-of-flight device are used in combination to monitor the monitored zone. The time-of-flight device may allow to monitor not only the boundary section itself but also its surroundings, in particular the monitored zone. Thereby, objects approaching the boundary section through the monitored zone may be detected and it can be possible to predict critical events occurring at the boundary section such as crossings of the boundary section. The prediction of the critical events may depend on the distance to the object determined by the time-of-flight device. Further, information about the object, such as the size of the object, can improve the monitoring of the monitored zone. The protection of the safety zone can thereby be improved. In particular, it can be prevented that an unauthorised object enters the safety zone more reliably.

The evaluation device is further configured to determine a pattern indicating an evolution of the distance to the object as a function of time, to compare this pattern to a predetermined pattern and to emit the evaluation result based on a result of the comparison between the pattern and the predetermined pattern.

The pattern and the predetermined pattern can be time patterns describing how the distance to the object evolves with time. The predetermined pattern can be a prestored pattern indicating how the distance to a standard authorized object evolves with time. Such a standard object may for example be a box and/or an object manufactured by a factory arrangement. The authorized object can further be an object which is expected and allowed to move within the monitored zone and/or in the safety zone. If the pattern determined by the evaluation unit differs from the predetermined pattern, this can be an indication that the object in the monitored zone is not an authorized object. In this case, the evaluation unit may recognize that the object is not authorized and emit an alarm and/or perform another protective measure to prevent the unauthorized object from entering the safety zone.

The evaluation device can determine the pattern based on a single wave signal (emitted and received light beams) of the time-of-flight device. In this case, the pattern can be determined for each wave signal of the time-of-flight device individually. Alternatively or in addition thereto, the evaluation device may determine the pattern based on a plurality of wave signals and/or based on all wave signals emitted by the time-of-flight device.

According to the invention, the monitoring device further comprises a protection device for performing a predetermined protective measure based on the evaluation result.

The evaluation device can send the evaluation result to the protection device. The protection device may take a decision regarding a protective measure to be taken in view of the evaluation result. For example, if the evaluation result indicates an immediate danger, the protection device can perform an emergency protective measure. This can be the case when the result indicates that an object is entering the safety zone, in particular when an object touches the boundary section. In this case, the protection device may, as a protective measure, turn off and/or slow down any dangerous facilities (such as factory devices) located in the safety zone to avoid damaging the entering object. The protection device can also, as another protective measure, provide a physical barrier to prevent the object from attaining the dangerous facilities of the safety zone.

Depending on the evaluation result, the protection device can perform different types of predetermined protective measures. In particular, the protection device determines the predetermined protective measure in accordance with the evaluation result. The protection device can also choose to take no actions if the evaluation result is not critical, in particular if no object is detected at or close to the boundary section and/or if the object is an authorized object.

The emission of the warning signal can be an example of a predetermined protective measure. The warning signal can be a light signal or a sound signal. The protection device allows to protect the boundary section, the safety zone and/or the object by taking appropriate protective measures depending on the evaluation result.

According to the invention, the evaluation device is configured to determine a velocity of the object based on several consecutive distance measurements performed by the time-of-flight device; and/or the time-of-flight device is configured to determine a velocity of the object based on several consecutive distance measurements performed by the time-of-flight device and/or to transmit the determined velocity of the object to the evaluation device, in particular upon request from the evaluation device.

In particular, the evaluation device and/or the time-of-flight device determines the velocity v of the object by dividing a difference Δd between the two consecutive distance measurements by the time Δt between the two consecutive distance measurements. In other words, v= Δd/ Δt. The evaluation device may determine the evaluation result based on the determined velocity information.

In some embodiments, the velocity of the object is prestored for the evaluation unit to access. This can be the case when the object is displaced by a conveyor belt moving at a predefined velocity which corresponds to the velocity of the object. In particular, the evaluation device and/or the time-of-flight device only determines the velocity of the object itself when there is no prestored velocity information. If there is a prestored velocity information, the evaluation device may access it to determine the evaluation result based thereon.

According to a further embodiment, the evaluation device is configured to determine a first instant at which the object starts touching the boundary section and/or a second instant at which the object ends touching the boundary section based on the velocity of the object and to include an indication about the first instant and/or the second instant in the evaluation result.

The first instant can be a point in time, in particular in the future, at which the object will start touching the boundary section. This may be a time at which the object is first detectable by the light curtain device. The second instant can be a point in time, in particular in the future, at which the object will stop touching the boundary section. This may be a time at which the object is last detectable by the light curtain device. In other words, the first and second instants are predictions about the time during which the object will cross the boundary section. In particular, the first and second instants are calculated using the velocity information of the object and assuming that the velocity of the object is constant.

According to a further embodiment, the monitoring device further comprises a muting device for temporarily deactivating the light curtain device along a muting height of the light curtain device as a function of the evaluation result.

The process of temporarily deactivating the light curtain device performed by the muting device can be called "muting". The muting function may be performed when the monitoring device recognizes that no critical event is occurring or about to occur. This can be the case when the evaluation device determines that the pattern corresponds to the predetermined pattern and/or that the object is an authorized object.

The muting can prevent the monitoring device from unnecessarily performing the predetermined protective measure. For example, the muting can be activated when the monitoring device recognises, based on the evaluation result, that the object passing the boundary section is moving away from the safety zone, that the object is a non-critical authorized object and/or when the object moves at a predetermined velocity. Further, muting can be inhibited when the evaluation result indicates that the object is very close from the safety zone, that the object is not an authorized object or the like.

The muting may be a muting of the entire light curtain device, for example of all light receiving elements of the light curtain device, and/or of only a part of the light curtain device, for example of only some of the light receiving elements of the light curtain device. The height along which the muting of the light curtain device is performed is in particular called "muting height".

According to a further embodiment, the muting device is configured to determine the muting height of the light curtain device based on an information about the distance to the object included in the evaluation result.

According to a further embodiment, the muting device is configured to determine the muting height of the light curtain device such that it is equal to a height of the object derived from the distance to the object included in the evaluation result.

In particular, the muting height is determined in accordance with the distance to the object, in particular with the height of the object. For example, the muting height is chosen to be equal to or greater than the height of the object determined from the distance to the object. If the muting height is equal to the height of the object, it can be avoided that an object, for example a person, hidden on top of the object, crosses the boundary section without being detected by the light curtain device. By optimizing the muting height, the safety of the safety zone can be further increased.

According to a further embodiment, the muting device is configured to at least partially deactivate the light curtain device between the first instant and the second instant.

In particular, the time for muting the light curtain device along the muting height extends between the first and the second instant. Thus, the muting of the light curtain device is limited to the duration during which the object actually crosses the boundary section, without being unnecessarily extended in time. Thereby, a muting time is optimized, hence improving the protection of the safety zone.

According to a further embodiment, the time-of-flight device is configured to emit a plurality of parallel light beams and to determine the size of the object based on a number of light beams reflected by the object and received by the time-of-flight device.

The light beams can be wave signals emitted by the time-of flight device. For example, the parallel light beams can be emitted uniformly along the area covered by the time-of-flight device. In other words, a same predetermined distance separates any two adjacent light beams of the time-of-flight device. The size of the object can be determined as being the predetermined distance multiplied by the number of light beams reflected by the object and received by the time-of-flight device.

According to a further embodiment, the protection device is configured to perform the protective measure when the evaluation result indicates that:
the distance to the object is smaller and/or greater than a predefined distance threshold;
the size of the object differs from a predetermined size; and/or
the pattern differs from the predetermined pattern.

When the distance to the object is smaller and/or greater than a predefined distance threshold, this may indicate that the object is too close from the safety zone. In this case, the protective measure can be performed. The protective measure may be performed in accordance with the distance to the object. For example, when the distance to the object is between a first and a second threshold, the evaluation result can indicate that the object is in a warning zone and/or the protection device can emit an alarm as a protective measure. Further, if the distance to the object is smaller than the second threshold, the evaluation result can indicate that the object is in a danger zone and/or the protection device can deactivate the dangerous machines located in the safety zone as a protective measure. Further, when the distance to the object is determined to be greater than the first threshold, the evaluation result can indicate that the object is in a safe zone and/or the protection device may not perform any protective measure. In some embodiments, the protective measure is the prevention of the muting.

Further, when the evaluation result indicates that the size of the object differs from the predetermined size and/or that the pattern differs from the predetermined pattern, this may indicate that the object is not an authorized object. To protect the safety zone and/or the object, the protection device can perform an appropriate protective measure.

According to a further embodiment, the monitoring device comprises a plurality of time-of-flight devices. In particular, the plurality of time-of-flight devices are arranged such as to monitor the entire monitored area. The use of several time-of-flight devices can be useful to obtain more information about the object such as its size and/or shape. This is particularly advantageous when the object has a complex or irregular shape. The monitoring of the monitored area and/or the protection of the safety zone can be improved using a plurality of time-of-flight devices.

The respective devices of the monitoring device, in particular the light curtain device, the time-of-flight device, the evaluation device, the protection device and the like, can be implemented in hardware and/or software.

According to a second aspect, a factory arrangement is provided. The factory arrangement comprises:
a monitored zone delimited by at least one boundary section;
a safety zone delimited by the at least one boundary section and adjacent to the monitored zone, wherein, in the safety zone, at least one factory device is arranged and implemented to perform a predetermined function; and
a monitoring device according to the first aspect or according to an embodiment of the first aspect, implemented to detect an object located in the monitored zone.

For example, the factory device is a manufacturing device, a conveyor belt or a packing device. It can comprise dangerous elements such as saws, drills, laser cutters and the like. The factory device can be used to manufacture objects such as metal, plastic or wood objects and/or to pack them in boxes, for example in cardboard boxes. In particular, it should be avoided that a human enters in contact with the dangerous elements of the factory device as the human may injure himself. The safety of the human and/or of the safety zone may be provided by the monitoring device already described above.

According to the present invention which is defined in claim 13, a method for monitoring a monitored zone which is adjacent to a safety zone is provided, The method comprises:
detecting whether an object touches a boundary section located at a boundary between the monitored zone and the safety zone;
detecting a distance to the object and/or a size of the object; and
emitting an evaluation result based on the distance to the object and/or on the size of the object, and optionally based on a light curtain signal indicating whether the object touches the boundary section.

The embodiments and features described with reference to the monitoring device according to the first aspect or according to an embodiment of the first aspect apply mutatis mutandis to the factory arrangement according to the second aspect and to the method according to the third aspect.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a monitoring device according to a first embodiment;
- Fig. 2: a factory arrangement according to a first embodiment;
- Fig. 3: shows a method for monitoring a monitored zone according to a first embodiment;
- Fig. 4: shows an example of a time-of-flight device;
- Fig. 5: shows a monitoring device according to a second embodiment;
- Fig. 6: shows a method for monitoring a monitored zone according to a second embodiment;
- Fig. 7: shows an example of a method for determining an evaluation result;
- Fig. 8: shows an example of a time pattern;
- Fig. 9: shows another view of the factory arrangement according to the first embodiment;
- Fig. 10: shows the factory arrangement according to the first embodiment with a partly muted light curtain device;
- Fig. 11: shows a factory arrangement according to a second embodiment; and
- Fig. 12: shows a factory arrangement according to a third embodiment.

In the Figures, like reference numerals designate like or functionally equivalent elements, unless otherwise indicated.

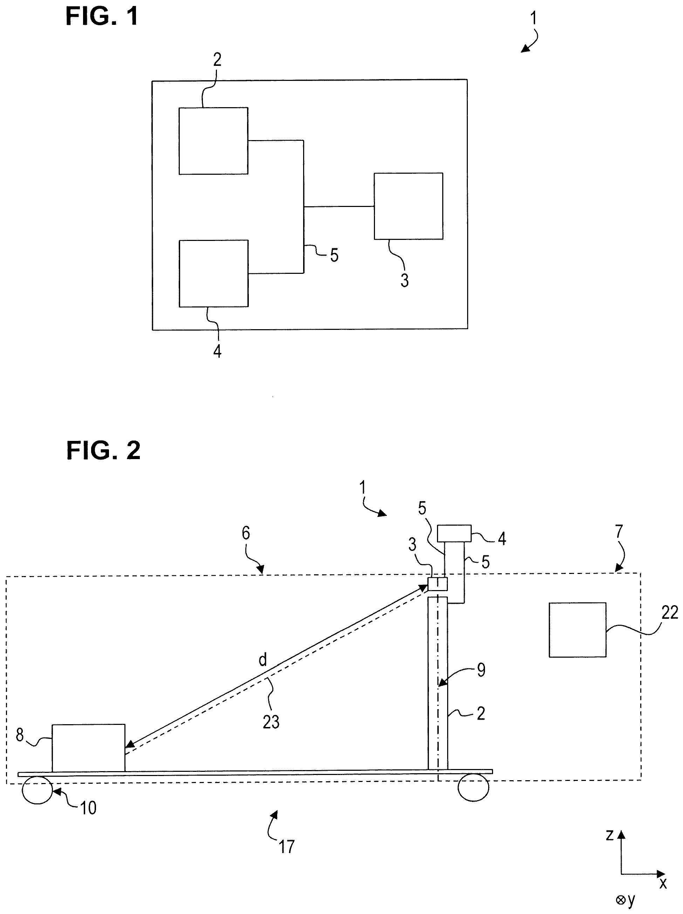

Fig. 1 shows a monitoring device 1 according to a first embodiment. The monitoring device 1 comprises a light curtain device 2, a time-of-flight device 3 and an evaluation device 4 connected to each other through cables 5. The functionality of the monitoring device 1 will be described in view of Fig. 2, which shows a factory arrangement 17 according to a first embodiment.

The factory arrangement 17 comprises the monitoring device 1 of Fig. 1. The monitoring device 1 is used to monitor a monitored zone 6. The monitored zone 6 is adjacent to a safety zone 7. The boundary between the monitored zone 6 and the safety zone 7 forms a boundary section 9. The safety zone 7 corresponds to a dangerous zone comprising a dangerous factory device 22. In the present example, the factory device 22 is for example a laser cutter used to cut objects to be manufactured. It is desired that humans, for example technicians, stay outside the safety zone 7 to avoid getting injured by the laser cutter 22. The factory arrangement 17 further comprises a conveyor belt 10 for transporting objects 8 between the monitored zone 6 and the safety zone 7.

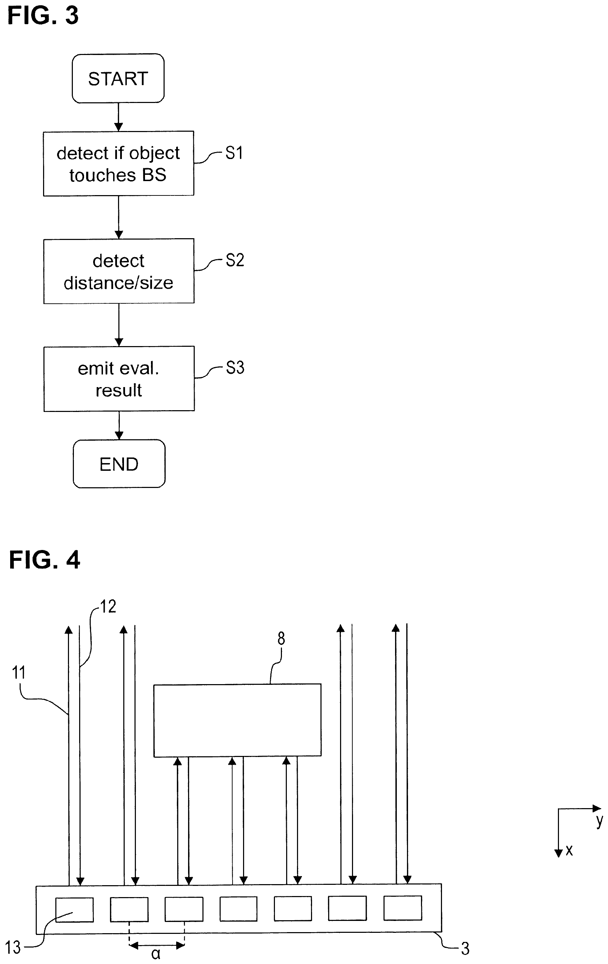

The safety zone 7 is a virtual cuboid that is delimited by the boundary section 9 on one side. Similarly, the monitored zone 6 is also a virtual cuboid that is delimited by the boundary section 9 on one side. The boundary section 9 is a plane. In the representation of Fig. 2, the boundary section 9 extends along the y-z plane and is represented as a dashed-and dotted line while the remaining boundaries of the safety zone 7 and of the monitored zone are represented by dashed lines. The monitoring device 1 of the factory arrangement can perform a method of monitoring a monitored zone 6. An example of such a method is shown in Fig. 3.

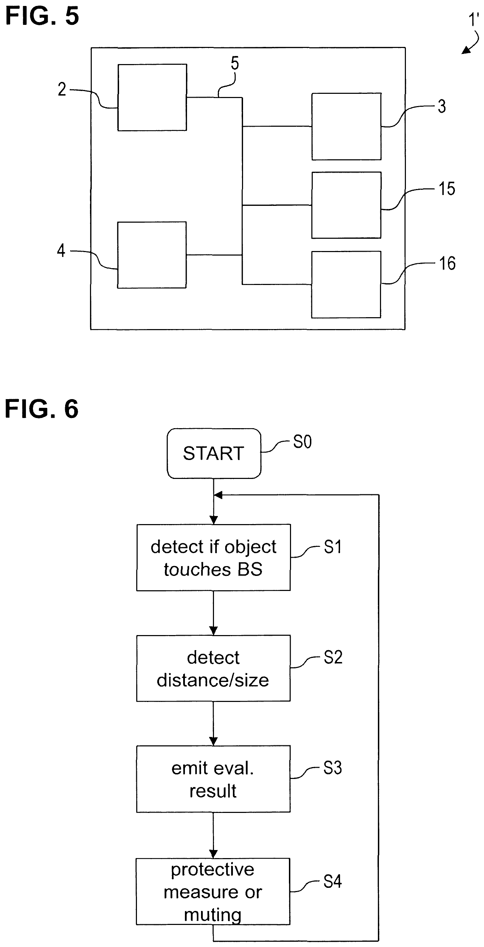

In a step S1 of Fig. 3, the light curtain device 2 detects whether an object 8 touches the boundary section 9. The light curtain device 2 comprises several light emitting elements 2a and several light receiving elements 2b which are not shown in Fig. 2 but visible on Fig. 6. The boundary section 9 extends between the light emitting element 2a and the light receiving elements 2b of the light curtain device 2. The light emitting elements 2a emit light along the boundary section 9. The light receiving elements 2b receive the light emitted as light beams by the light emitting elements 2a. If no or less light is received by the light receiving element 2b, it can be determined that the object 8 touches the light beams and hence the boundary section 9. In Fig. 2, the object 8 is a box which is not touching the boundary section 3. Accordingly, the light curtain device 2 emits a light curtain signal indicating that no object 8 is touching or crossing the boundary section 9. In the example of Fig. 2, the time-of-flight device 3 is located at one edge of the boundary section 9.

In a step S2 of Fig. 3, a distance d to the object 8 and/or a size thereof is determined using the time-of-flight device 3. The time-of-flight device 3 is used contemporaneously to the light curtain device 2. The time-of-flight device 3 monitors the monitored zone 6 using light signals 23. When the object 8 is touched by the light signal 23, it reflects the light back towards the time-of-flight device 3. The time-of-flight device 3 detects the light reflected back by the object 8 and calculates a distance d to the object 8 based on a time (time-of-flight) taken for the light signal 23 to travel from the time-of-flight device 3 to the object 8 and back.

The size of the object 8 is determined as shown in Fig. 4. In the view of Fig. 4, the time-of-flight device 3 is seen from above. The time-of-flight device 3 comprises a plurality (here seven) emission and reception units 13 for respectively emitting a light beam 11 and receiving a reflected light beam 12. The time-of-flight of the light beams 12 which are reflected by the object 8 are considerably shorter than those which do get reflected by the conveyor belt 10 (not shown) rather than by the object 8. By comparing the time-of-flight of the individual received light beams 12, the time-of-flight device 3 determines which received light beams 12 were reflected by the object 8 and which were not. Based on the number of reflected light beams 12 reflected by the object, the time-of-flight device 3 calculates the size (along the y-direction) of the object 8 using the fact that neighboring emission and reception units 13 are evenly spaced by a predetermined distance α along the time-of-flight device 3. In the example of Fig. 4, three light beams 12 are reflected by the object 8, so that the size of the object 8 along the y-direction is between 2α and 3α.

The information about the distance to the object 8 and the size of the object 8 is transmitted to the evaluation device 4 for evaluation.

In a step S3 (Fig. 3), the evaluation device 4 emits an evaluation result based on the distance to the object 8, the size of the object 8 and the light curtain signal. The evaluation result provides information about the monitored zone 6, thereby facilitating the monitoring of the monitored zone 6 and the protection of the security zone 7.

Fig. 5 shows a monitoring device 1' according to a second embodiment. The monitoring device 1' according to the second embodiment differs from the monitoring device 1 according to the first embodiment in that is further comprises a protection device 15 and a muting device 16. The monitoring device 1' can be used monitor a monitored zone 6 according to the method of the first embodiment (Fig. 3) or according to a method of a second embodiment (Fig. 6).

In the following, the functionality of the monitoring device 1' will be described in view of the Fig. 5 - 10.

The steps S1 - S3 of the method according to the second embodiment (Fig. 6) are identical to the steps S1 - S3 described in view of Fig. 3. In a step S4 (Fig. 6), a protective measure or a muting is performed. In detail, the protective measure, for example the emission of an alarm or a deactivation of the factory device 22, is performed by the protection device 15 to protect the safety zone 7 and/or the object 8. The muting is an at least partial deactivation of the light curtain device 2 which is performed by the muting device 16. The decision about whether muting or a protective measure is to be performed is made in accordance with the evaluation result. The muting and the performing of the protective measure will be described in detail further below.

Once the step S4 has been performed and/or while it is still being performed, the steps S1 - S4 are cyclically repeated to constantly monitor the monitored zone 6.

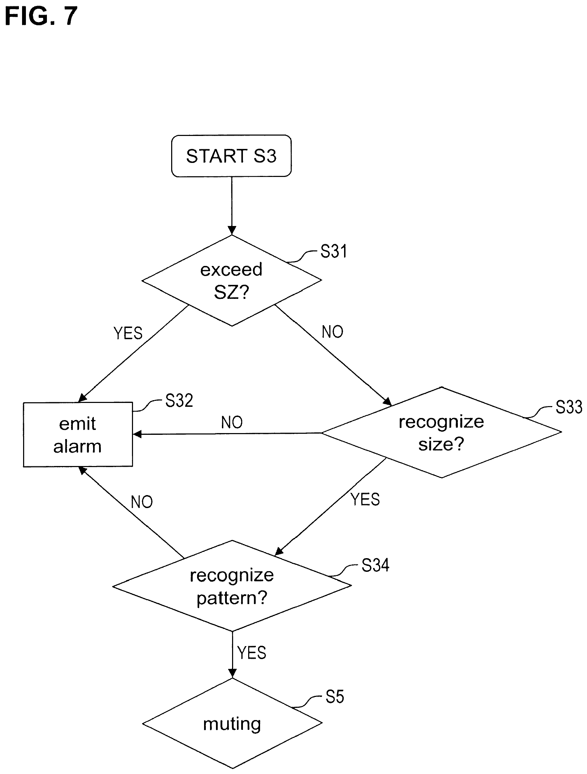

Fig. 7 shows an example of how the evaluation result is determined in the step S3. In detail, in a step S31, the evaluation device 4 determines whether the object 8 is closer to the boundary section 9 than allowed, in particular whether it is outside a safety zone SZ.

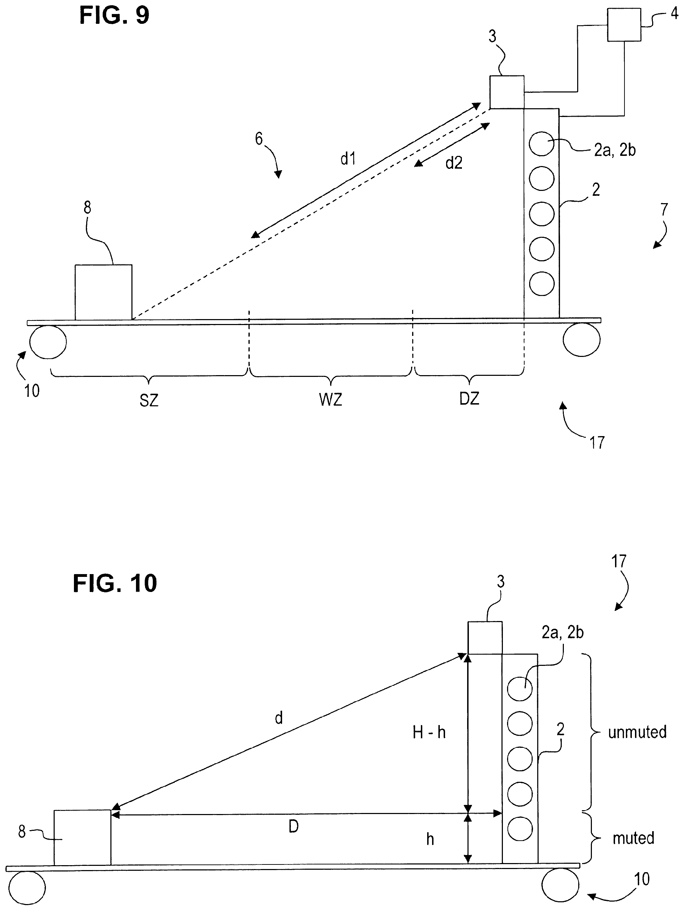

The safety zone SZ is shown in Fig 9 as a zone of the monitored zone 6 that is furthest away from the boundary section 2. If the evaluation device 4 determines that the distance d to the object 8 is greater than a first predefined distance threshold di, at it is the case in Fig. 9, it determines that the object 8 is located in the safety zone SZ. However, if the evaluation device 4 determines that the distance d to the object 8 is smaller than the first predefined distance threshold d₁ but larger than a second predefined distance threshold d₂, it determines that the object 8 is located in the warning zone WZ. Finally, if the evaluation device 4 determines that the distance d to the object 8 is smaller than the second predefined distance threshold d₂, it determines that the object 8 is located in the danger zone DZ. The evaluation result is thus emitted in accordance with the zone SZ, WZ, DZ in which the object 8 is located. The protection device 15 performs the protective measure in accordance with the zone SZ, WZ and DZ in which the object 8 is located.

Thus, in the step S31 of Fig. 7, when the object 8 is not in the safety zone SZ, the protection device 15 emits an alarm signal as a protective measure in a step S32. Otherwise, if the object 8 is still in the safety zone SZ, the evaluation device 4 determines whether it recognizes the size of the object 8 in a step S33. In detail, the size of the object 8 determined by the time-of-flight device 3 (Fig. 4) is compared to a predetermined size which is prestored in the evaluation unit 4. The predetermined size is the size of an authorized, "white-listed" object 8 which is allowed into the safety zone 7.

If the determined size of the object 8 is not equal to the predetermined size, namely when the size is not recognized, the protection device 15 emits an alarm signal as a protective measure in a step S32. Otherwise, the evaluation device 4 performs a pattern verification in a step S34.

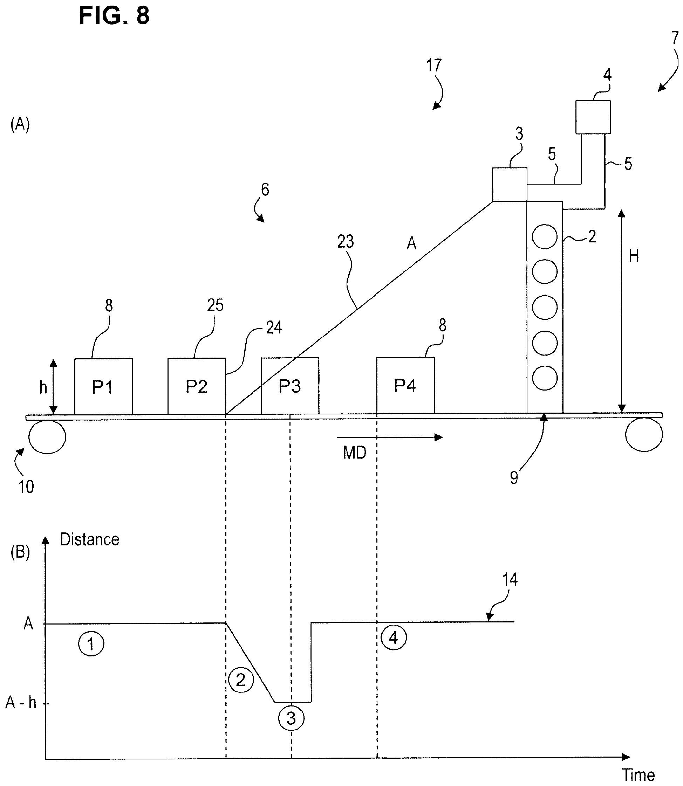

The pattern verification is described in detail in view of Fig. 8. The upper part of Fig. 8 (Fig. 8 (A)) shows the factory arrangement 17 with the object 8 in four different positions P1 - P4 as it moves along a movement direction MD on the conveyor belt 10. The bottom part of Fig. 8 (Fig. 8 (B)) shows how the distance d to the object 8 determined by the time-of-flight device 3 changes with time as the object 8 moves towards the boundary section 9. This relationship between the distance d and the time is the pattern 14. The evaluation device 4 can determine the pattern 14 based either on individual light signals 23 (namely based on one emitted beam 11 and one received beam 12 at a time) or based on several light signals 23.

In the regions 1 and 4 of the pattern 14, the distance d is constant and has a value A. This corresponds to the standard distance between the time-of-flight device 3 and the conveyor belt 10 which is detected when no object 8 reflects the light beam 23 of the time-of-flight device 3. In the region 2 of the pattern 14, the distance d to the object 8 decreases linearly. This corresponds to the light beam 23 getting reflected by a side 24 of the object 8. Finally, in the region 3 of the pattern 14, the distance d to the object is constant at a value of approximatively A - h, with h being the height of the object 8. This corresponds to the light beam 23 being reflected by a top surface 25 of the object 8.

In the step S34 of Fig. 7, the evaluation device 4 determines the pattern of the object 8 and compares it to a predetermined pattern stored for authorized objects 8. If the patterns are identical, namely if the determined pattern is recognized, the muting device 16 performs the muting in a step S5. Otherwise, if the patterns are not identical, the protection device 15 emits an alarm signal as a protective measure in step S32.

Thus, the evaluation device 4 performs various verifications on the object 8 to determine whether it is allowed to enter the safety zone 8. If the object 8 is an authorized object 8 according to these verifications, the muting device 16 mutes or deactivates at least a part of the light curtain device 2 to let the object 8 enter the safety zone 7.

The muting device 16 performs the muting in accordance with the evaluation result, which indicates a height h of the object 8 as determined by the evaluation device 4. In detail, the height of the object 8 is defined as the muting height h along which the light curtain device 2 is temporarily deactivated. In the example of Fig. 10, the bottom two light emitting elements 2a and the bottom two light receiving elements 2b are muted while the upper three light emitting elements 2a and the upper three light receiving elements 2b are not muted. Thus, the muting is optimized to improve the protection of the safety zone 7.

In the example of Fig. 10, the evaluation device 4 determines the muting height h using the Pythagorean theorem and/or trigonometry. To further improve the muting, the evaluation device 4 calculates a first and a second instant between which the object 8 will cross the boundary section 9 using an information about the velocity of the conveyor belt 10 and hence of the object 8. The indication about the first and second instants is included in the evaluation result. The muting device 16 then partially mutes the light curtain device 2 precisely during the first and second instants determined by the evaluation device 2. Thereby, the partial muting of the light curtain device 2 is further optimized, thus improving the protection of the safety zone 7.

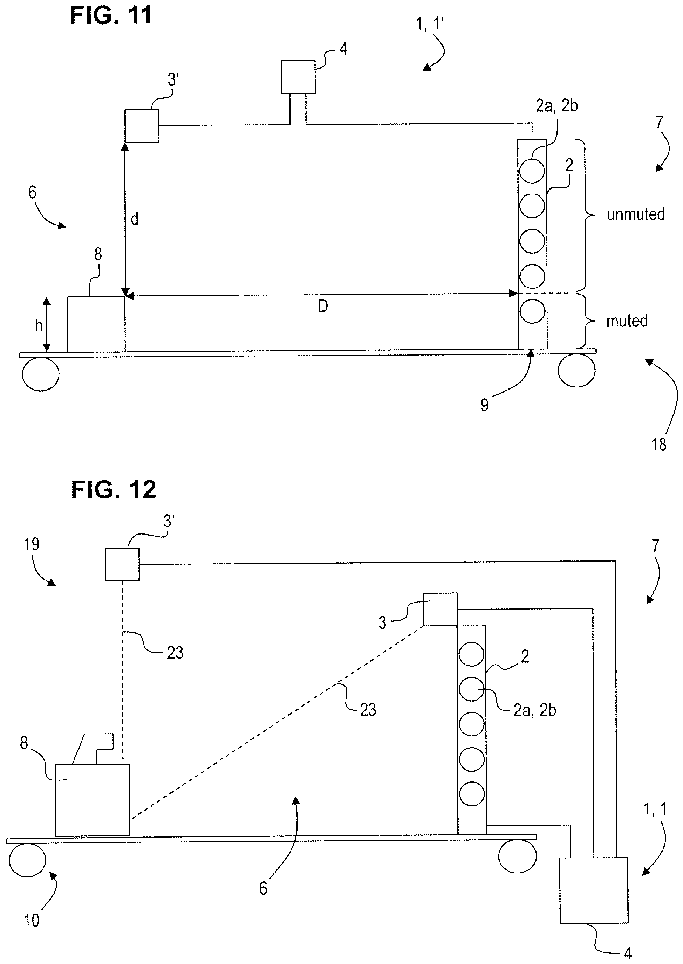

Fig. 11 shows a factory arrangement 18 according to a second embodiment. The factory arrangement 18 according to the second embodiment differs from the factory arrangement 17 according to the first embodiment 18 in that the time-of-flight device 3' is located at a distance D from the boundary section 9 rather than being located at an edge of the boundary section 9.

Fig. 12 shows a factory arrangement 19 according to a third embodiment. The factory arrangement 19 according to the third embodiment differs from the factory arrangement 17 according to the first embodiment 18 in that it comprises two time-of-flight devices 3, 3' respectively located at a distance D from the boundary section 9 and at an edge of the boundary section 9. This allows a better monitoring of the monitored zone 6 because complex shapes of the object 8 can be accounted for.

Although the present invention has been described in accordance with preferred embodiments, it is obvious for the person skilled in the art that modifications are possible in all embodiments. For example, the evaluation device 4 may calculate the velocity of the object 8 based on consecutive distance measurements made by the time-of-flight device 3 instead of obtaining it from a database,

### REFERENCE NUMERALS

- 1, 1': monitoring device
- 2: light curtain device
- 2a: light emitting element
- 2b: light receiving element
- 3, 3': time-of-flight device
- 4: evaluation device
- 5: cable
- 6: monitored zone
- 7: safety zone
- 8: object
- 9: boundary section
- 10: conveyor belt
- 11: emitted beam
- 12: reflected beam
- 13: emission/reception unit
- 14: pattern
- 15: protection device
- 16: muting device
- 17 - 19: factory arrangement
- 22: factory device
- 23: light signal
- 24: side
- 25: top surface
- α: predetermined distance
- A: beam distance
- d: distance
- d₁: first predefined distance threshold
- d₂: second predefined distance threshold
- D: distance
- DZ: danger zone
- h: height
- MD: movement direction
- P1 - P3: position
- SZ: safety zone
- WZ: warning zone
- S1 - S5: method steps
- S31 - S34: method steps

## Claims

1. A monitoring device (1, 1') for monitoring a monitored zone (6) which is adjacent to a safety zone (7), wherein the monitoring device (1, 1') comprises:
a light curtain device (2) for detecting an object (8) touching a boundary section (9) located at a boundary between the monitored zone (6) and the safety zone (7);
a time-of-flight device (3, 3') for detecting a distance (d) to the object (8) and/or a size of the object (8);
an evaluation device (4) for emitting an evaluation result based on the distance (d) to the object (8) and/or on the size of the object (8) determined by the time-of-flight device (3, 3'); and
a protection device (15) for performing a predetermined protective measure based on the evaluation result; wherein
the evaluation device (4) is configured to determine a velocity of the object (8) based on several consecutive distance measurements performed by the time-of-flight device (3, 3'); and/or
the time-of-flight device (3, 3') is configured to determine a velocity of the object (8) based on several consecutive distance measurements performed by the time-of-flight device (3, 3') and/or to transmit the determined velocity of the object (8) to the evaluation device (4), wherein
the evaluation device (4) is further configured to determine a pattern (14) indicating an evolution of the distance (d) to the object (8) as a function of time, to compare this pattern (14) to a predetermined pattern and to emit the evaluation result based on a result of the comparison between the pattern (14) and the predetermined pattern.

2. The monitoring device according to claim 1, wherein the evaluation device (4) is further configured to emit the evaluation result based on a light curtain signal from the light curtain device (2).

3. The monitoring device according to one of claims 1 or 2, wherein:
the time-of-flight device (3, 3') is configured to transmit the determined velocity of the object (8) to the evaluation device (4) upon request from the evaluation device (4).

4. The monitoring device according to claim 3, wherein the evaluation device (4) is configured to determine a first instant at which the object (8) starts touching the boundary section (9) and/or a second instant at which the object (8) ends touching the boundary section (9) based on the velocity of the object (8) and to include an indication about the first instant and/or the second instant in the evaluation result.

5. The monitoring device according to any one of claims 1 to 4, further comprises a muting device (16) for temporarily deactivating the light curtain device (2) along a muting height (h) of the light curtain device (2) as a function of the evaluation result.

6. The monitoring device according to claim 5, wherein the muting device (16) is configured to determine the muting height (h) of the light curtain device (2) based on an information about the distance to the object (8) included in the evaluation result.

7. The monitoring device according to claim 6, wherein the muting device (16) is configured to determine the muting height (h) of the light curtain device (2) such that it is equal to a height of the object (8) derived from the distance to the object (8) included in the evaluation result.

8. The monitoring device according to any one of claims 5 to 7, wherein the muting device (16) is configured to at least partially deactivate the light curtain device (2) between the first instant and the second instant.

9. The monitoring device according to any one of claims 1 to 8, wherein the time-of-flight device (3, 3') is configured to emit a plurality of parallel light beams (11) and to determine the size of the object (8) based on a number of light beams (12) reflected by the object (8) and received by the time-of-flight device (3, 3').

10. The monitoring device according to any one of claims 2 to 9, wherein the protection device (15) is configured to perform the protective measure when the evaluation result indicates that:
the distance to the object (8) is smaller and/or greater than a predefined distance threshold (d₁, d₂);
the size of the object (8) differs from a predetermined size; and/or
the pattern (14) differs from the predetermined pattern (14).

11. The monitoring device according to any one of claims 1 to 10, which comprises a plurality of time-of-flight devices (3, 3').

12. A factory arrangement (17 - 19), comprising:
a monitored zone (6) delimited by at least one boundary section (9);
a safety zone (7) delimited by the boundary section (9) and adjacent to the monitored zone (6), wherein, in the safety zone (7), at least one factory device is arranged and implemented to perform a predetermined function; and
a monitoring device (1, 1') according to any one claims 1 - 11, implemented to detect an object (8) located in the monitored zone (6).

13. A method for monitoring a monitored zone (6) which is adjacent to a safety zone (7), the method comprising, by using the monitoring device according to any one of claims 1 to 11:
detecting (S1) whether an object (8) touches a boundary section (9) located at a boundary between the monitored zone (6) and the safety zone (7) using the light curtain device (2);
detecting (S2) a distance (d) to the object (8) and/or a size of the object (8) using the time-of-flight device (3, 3');
emitting (S3) an evaluation result based on the distance (d) to the object (8) and/or on the size of the object (8);
performing a predetermined protective measure based on the evaluation result; and
determining a velocity of the object (8) based on several consecutive distance measurements.

## Patentansprüche

1. Überwachungseinrichtung (1, 1') zur Überwachung einer überwachten Zone (6), die an eine Sicherheitszone (7) angrenzt, wobei die Überwachungseinrichtung (1, 1') umfasst:
eine Lichtschrankeneinrichtung (2) zum Erfassen eines Objekts (8), das einen Grenzabschnitt (9) berührt, der sich an einer Grenze zwischen der überwachten Zone (6) und der Sicherheitszone (7) befindet;
eine Laufzeiteinrichtung (3, 3') zum Erfassen eines Abstands (d) zu dem Objekt (8) und/oder einer Größe des Objekts (8);
eine Auswerteeinrichtung (4) zum Ausgeben eines Auswerteergebnisses basierend auf dem Abstand (d) zu dem Objekt (8) und/oder auf der Größe des Objekts (8), die die Laufzeiteinrichtung (3, 3') erfasst; und
eine Schutzeinrichtung (15) zur Durchführung einer vorbestimmten Schutzmaßnahme basierend auf dem Auswerteergebnis; wobei
die Auswerteeinrichtung (4) geeignet ist, eine Geschwindigkeit des Objekts (8) basierend auf mehreren aufeinanderfolgenden Abstandsmessungen zu bestimmen, die von der Laufzeiteinrichtung (3, 3') durchgeführt werden; und/oder
die Laufzeiteinrichtung (3, 3') geeignet ist, eine Geschwindigkeit des Objekts (8) basierend auf mehreren aufeinanderfolgenden Abstandsmessungen, die von der Laufzeiteinrichtung (3, 3') durchgeführt werden, zu bestimmen und/oder um die bestimmte Geschwindigkeit des Objekts (8) an die Auswerteeinrichtung (4) zu übertragen, wobei
die Auswerteeinrichtung (4) ferner geeignet ist, ein Muster (14) zu bestimmen, das eine Entwicklung des Abstands (d) zu dem Objekt (8) als Funktion der Zeit anzeigt, dieses Muster (14) mit einem vorbestimmten Muster zu vergleichen und das Auswerteergebnis basierend auf einem Ergebnis des Vergleichs zwischen dem Muster (14) und dem vorbestimmten Muster auszugeben.

2. Überwachungseinrichtung nach Anspruch 1, wobei
die Auswerteeinrichtung (4) ferner geeignet ist, das Auswerteergebnis basierend auf einem Lichtschrankensignal der Lichtschrankeneinrichtung (2) auszugeben.

3. Überwachungseinrichtung nach einem der Ansprüche 1 oder 2, wobei:
die Laufzeiteinrichtung (3, 3') geeignet ist, die bestimmte Geschwindigkeit des Objekts (8) auf Anfrage der Auswerteeinrichtung (4) an die Auswerteeinrichtung (4) zu übertragen.

4. Überwachungseinrichtung nach Anspruch 3, wobei die Auswerteeinrichtung (4) geeignet ist, einen ersten Zeitpunkt, zu dem das Objekt (8) beginnt, den Grenzabschnitt (9) zu berühren, und/oder einen zweiten Zeitpunkt, zu dem das Objekt (8) aufhört, den Grenzabschnitt (9) zu berühren, basierend auf der Geschwindigkeit des Objekts (8) zu bestimmen und eine Angabe über den ersten Zeitpunkt und/oder den zweiten Zeitpunkt in das Auswerteergebnis aufzunehmen.

5. Überwachungseinrichtung nach einem der Ansprüche 1 bis 4, welche ferner eine Muting-Einrichtung (16) zum vorübergehenden Deaktivieren der Lichtschrankeneinrichtung (2) entlang einer Muting-Höhe (h) der Lichtschrankeneinrichtung (2) in Abhängigkeit des Auswerteergebnisses umfasst.

6. Überwachungseinrichtung nach Anspruch 5, wobei
die Muting-Einrichtung (16) geeignet ist, die Muting-Höhe (h) der Lichtschrankeneinrichtung (2) basierend auf einer Information über den Abstand zu dem Objekt (8) zu bestimmen, die in dem Auswerteergebnis enthalten ist.

7. Überwachungseinrichtung nach Anspruch 6, wobei
die Muting-Einrichtung (16) geeignet ist, die Muting-Höhe (h) der Lichtschrankeneinrichtung (2) so zu bestimmen, dass sie gleich einer Höhe des Objekts (8) ist, die sich aus dem in dem Auswerteergebnis enthaltenen Abstand zu dem Objekt (8) ergibt.

8. Überwachungseinrichtung nach einem der Ansprüche 5 bis 7, wobei die Muting-Einrichtung (16) geeignet ist, die Lichtschrankeneinrichtung (2) zwischen dem ersten und dem zweiten Zeitpunkt zumindest teilweise zu deaktivieren.

9. Überwachungseinrichtung nach einem der Ansprüche 1 bis 8, wobei die Laufzeiteinrichtung (3, 3') geeignet ist, eine Vielzahl von parallelen Lichtstrahlen (11) auszusenden und die Größe des Objekts (8) basierend auf einer Anzahl von Lichtstrahlen (12) zu bestimmen, die von dem Objekt (8) reflektiert und von der Laufzeiteinrichtung (3, 3') empfangen werden.

10. Überwachungseinrichtung nach einem der Ansprüche 2 bis 9, wobei die Schutzeinrichtung (15) geeignet ist, die Schutzmaßnahme durchzuführen, wenn das Auswertungsergebnis angibt, dass:
der Abstand zum Objekt (8) kleiner und/oder größer als ein vordefinierter Abstandsschwellenwert (d1, d2) ist;
die Größe des Objekts (8) von einer vorbestimmten Größe abweicht; und/oder
das Muster (14) von dem vorbestimmten Muster (14) abweicht.

11. Überwachungseinrichtung nach einem der Ansprüche 1 bis 10, die eine Vielzahl von Laufzeiteinrichtungen (3, 3') umfasst.

12. Fabrikanordnung (17 - 19), umfassend:
eine überwachte Zone (6), die durch mindestens einen Grenzabschnitt (9) begrenzt wird;
eine Sicherheitszone (7), die durch den Grenzabschnitt (9) begrenzt ist und an die überwachte Zone (6) angrenzt, wobei in der Sicherheitszone (7) mindestens eine Fabrikeinrichtung angeordnet ist und geeignet ist, eine vorbestimmte Funktion auszuführen; und
eine Überwachungseinrichtung (1, 1') nach einem der Ansprüche 1 - 10, die zur Erkennung eines sich in der überwachten Zone (6) befindenden Objekts (8) eingesetzt wird.

13. Verfahren zur Überwachung einer überwachten Zone (6), die an eine Sicherheitszone (7) angrenzt, wobei das Verfahren umfasst mittels der Überwachungseinrichtung nach einem der Ansprüche 1 bis 10:
Erfassen (S1), ob ein Objekt (8) einen Grenzabschnitt (9) berührt, der sich an einer Grenze zwischen der überwachten Zone (6) und der Sicherheitszone (7) befindet, unter Verwenden der Lichtschrankeneinrichtung (2);
Erfassen (S2) eines Abstands (d) zu dem Objekt (8) und/oder einer Größe des Objekts (8) unter Verwenden der Laufzeiteinrichtung (3, 3');
Ausgeben (S3) eines Auswerteergebnisses basierend auf dem Abstand (d) zum Objekt (8) und/oder der Größe des Objekts (8);
Durchführen einer vorbestimmten Schutzmaßnahme basierend auf dem Auswerteergebnis; und
Bestimmen einer Geschwindigkeit des Objekts (8) basierend auf mehreren aufeinanderfolgenden Abstandsmessungen.

## Revendications

1. Dispositif de surveillance (1, 1') pour surveiller une zone surveillée (6) qui est adjacente à une zone de sécurité (7), le dispositif de surveillance (1, 1') comprenant :
un dispositif de barrière immatérielle (2) pour détecter un objet (8) touchant une section limite (9) située à une limite entre la zone surveillée (6) et la zone de sécurité (7) ;
un dispositif de temps de vol (3, 3') pour détecter une distance (d) à l'objet (8) et/ou une taille de l'objet (8) ;
un dispositif d'évaluation (4) pour émettre un résultat d'évaluation basé sur la distance (d) à l'objet (8) et/ou sur la taille de l'objet (8) détectée par le dispositif de temps de vol (3, 3'); et
un dispositif de protection (15) pour exécuter une mesure de protection prédéterminée sur la base du résultat d'évaluation; dans lequel
le dispositif d'évaluation (4) est configuré pour déterminer une vitesse de l'objet (8) sur la base de plusieurs mesures de distance consécutives effectuées par le dispositif de temps de vol (3, 3') ; et/ou
le dispositif de temps de vol (3, 3') est configuré pour déterminer une vitesse de l'objet (8) sur la base de plusieurs mesures de distance consécutives effectuées par le dispositif de temps de vol (3, 3') et/ou pour transmettre la vitesse déterminée de l'objet (8) au dispositif d'évaluation (4), dans lequel
le dispositif d'évaluation (4) est en outre configuré pour déterminer un modèle (14) indiquant une évolution de la distance (d) à l'objet (8) en fonction du temps, pour comparer ce modèle (14) à un modèle prédéterminé et pour émettre le résultat d'évaluation sur la base du résultat de la comparaison entre le modèle (14) et le modèle prédéterminé.

2. Dispositif de surveillance selon la revendication 1, dans lequel le dispositif d'évaluation (4) est en outre configuré pour émettre le résultat d'évaluation basé sur un signal de barrière immatérielle du dispositif de barrière immatérielle (2).

3. Dispositif de surveillance selon l'une des revendications 1 ou 2, dans lequel :
le dispositif de temps de vol (3, 3') est configuré pour transmettre la vitesse déterminée de l'objet (8) au dispositif d'évaluation (4) sur demande du dispositif d'évaluation (4).

4. Dispositif de surveillance selon la revendication 3, dans lequel le dispositif d'évaluation (4) est configuré pour déterminer un premier instant auquel l'objet (8) commence à toucher la section limite (9) et/ou un deuxième instant auquel l'objet (8) finit de toucher la section limite (9) sur la base de la vitesse de l'objet (8) et pour inclure une indication sur le premier instant et/ou le deuxième instant dans le résultat d'évaluation.

5. Dispositif de surveillance selon l'une des revendications 1 à 4, comprenant en outre un dispositif de désactivation (16) pour désactiver temporairement le dispositif de barrière immatérielle (2) le long d'une hauteur de désactivation (h) du dispositif de barrière immatérielle (2) en fonction du résultat d'évaluation.

6. Dispositif de surveillance selon la revendication 5, dans lequel le dispositif de désactivation (16) est configuré pour déterminer la hauteur de désactivation (h) du dispositif de barrière immatérielle (2) sur la base d'une information concernant la distance à l'objet (8) incluse dans le résultat d'évaluation.

7. Dispositif de surveillance selon la revendication 6, dans lequel le dispositif de désactivation (16) est configuré pour déterminer la hauteur de désactivation (h) du dispositif de barrière immatérielle (2) de telle sorte qu'elle soit égale à une hauteur de l'objet (8) dérivée de la distance à l'objet (8) incluse dans le résultat d'évaluation.

8. Dispositif de surveillance selon l'une des revendications 1 à 7, dans lequel le dispositif d'évaluation (16) est configuré pour désactiver au moins partiellement le dispositif de barrière immatérielle (2) entre le premier instant et le deuxième instant.

9. Dispositif de surveillance selon l'une quelconque des revendications 1 à 8, dans lequel le dispositif de temps de vol (3, 3') est configuré pour émettre une pluralité de faisceaux lumineux parallèles (11) et pour déterminer la taille de l'objet (8) sur la base du nombre de faisceaux lumineux (12) réfléchis par l'objet (8) et reçus par le dispositif de temps de vol (3, 3').

10. Dispositif de surveillance selon l'une quelconque des revendications 2 à 9, dans lequel le dispositif de protection (15) est configuré pour exécuter la mesure de protection lorsque le résultat d'évaluation indique que :
la distance à l'objet (8) est inférieure et/ou supérieure à un seuil de distance prédéfini (d1, d2) ;
la taille de l'objet (8) diffère d'une taille prédéterminée ; et/ou
le modèle (14) diffère du modèle prédéterminé (14).

11. Dispositif de surveillance selon l'une des revendications 1 à 10, qui comprend une pluralité de dispositifs de temps de vol (3, 3').

12. Agencement d'usine (17 - 19), comprenant :
une zone surveillée (6) délimitée par au moins une section limite (9) ;
une zone de sécurité (7) délimitée par la section limite (9) et adjacente à la zone surveillée (6), dans lequel, dans la zone de sécurité (7), au moins un dispositif d'usine est disposé et réalisé pour remplir une fonction prédéterminée ; et
un dispositif de surveillance (1, 1') selon l'une des revendications 1 à 10, utilisé pour détecter un objet (8) situé dans la zone surveillée (6).

13. Procédé de surveillance d'une zone surveillée (6) qui est adjacente à une zone de sécurité (7), la méthode comprenant par l'utilisation de le dispositif de surveillance selon l'une des revendications 1 à 10:
détection (S1) si un objet (8) touche une section limite (9) située à une limite entre la zone surveillée (6) et la zone de sécurité (7) en utilisant le dispositif de barrière immatérielle (2);
détection (S2) d'une distance (d) à l'objet (8) et/ou d'une taille de l'objet (8) en utilisant le dispositif de temps de vol (3, 3');
émission (S3) d'un résultat d'évaluation basé sur la distance (d) à l'objet (8) et/ou sur la taille de l'objet (8) ;
exécution d'une mesure de protection prédéterminée sur la base du résultat d'évaluation ; et
détermination d'une vitesse de l'objet (8) sur la base de plusieurs mesures de distance consécutives.
